# EUROPÄISCHE PATENTSCHRIFT

(11) **EP 2 117 905 B1**
(45) Veröffentlichungstag und Bekanntmachung des Hinweises auf die Patenterteilung: **21.07.2010**
(21) Anmeldenummer: 08715948.9
(22) Anmeldetag: 22.02.2008
(51) Int. Cl.: B62D 1/12, G05G 9/047

(54) **JOYSTICK**
JOYSTICK
SÉLECTEUR DU TYPE MANCHE À BALAI

(30) Priorität: 09.03.2007 DE 102007012278
(43) Veröffentlichungstag der Anmeldung: 18.11.2009
(73) Patentinhaber: CoActive Technologies, Inc., Greenwich CT 06830 (US)
(72) Erfinder: KOSCHKE, Henning, 10115 Berlin (DE); GOEBELT, Thomas, 16547 Birkenwerder (DE); CEMERIKA, Michael, 13581 Berlin (DE); BUCHHOLD-TOMAZIC, Christian, 16515 Oranienburg (DE); MEYER-QUADE, Joachim, 14157 Berlin (DE)
(74) Vertreter: Fuhlendorf, Jörn
(86) Internationale Anmeldenummer: PCT/EP2008/001396
(87) Internationale Veröffentlichungsnummer: WO 2008/110255

(56) Entgegenhaltungen:
- EP-A- 1 602 550
- DE-A1- 10 343 141
- JP-A- 11 154 029
- US-A1- 2004 003 954

## Beschreibung

Die vorliegende Erfindung bezieht sich auf einen Joystick zur Steuerung von Maschinen- und/oder Fahrzeugfunktionen nach dem Oberbegriff des Anspruchs 1.

Zur Steuerung von Maschinen- und/oder Fahrzeugfunktionen sind Joysticks bzw. Bedienhebel bekannt, die eine passive Kraftrückmeldung in Form einer federnden Rückstellung zur Mitte oder eine Festhaltung in beliebiger Position durch Reibkraft besitzen. Bedienhebel mit passiver Kraftrückmeldung geben jedoch keine Informationen über den Zustand der Maschine bzw. des Fahrzeugs.

Aus der DE 103 43 141 A1 ist ein gattungsgemässer Joystick bzw. Bedienhebel bekannt, der zur aktiven Kraftrückmeldung mit zwei Elektromotoren mit jeweils einem Untersetzungsgetriebe ausgestattet ist. Die beiden Untersetzungsgetriebe bzw. deren Motoren wirken gegeneinander. Die Motoren mit ihrem Getriebe sind mit dem Griffhebel des Joysticks durch eine Torsionsfeder verbunden, so dass der Bedienhebel durch die Motoren auf eine Position gestellt ist, die beispielsweise dem Lenkwinkel entspricht.

Ein derartiger Joystick bzw. Bedienhebel mit der vorgenannten aktiven Kraftrückmeldung besitzt eine sehr aufwändige Mechanik sowie aufwändige optische Sensoren, was zu erheblichen Kosten führt.

Aufgabe der vorliegenden Erfindung ist es deshalb, einen Joystick bzw. Bedienhebel zur Steuerung von Maschinen- und/oder Fahrzeugfunktionen der eingangs genannten Art zu schaffen, der eine preiswertere Serienfertigung ermöglicht. Zur Lösung dieser Aufgabe sind bei einem Joystick zur Steuerung von Maschinen- und/oder Fahrzeugfunktionen die im Anspruch 1 angegebenen Merkmale vorgesehen.

Durch die erfindungsgemäßen Maßnahmen ist eine kostengünstigere Ausgestaltung des Joysticks bzw. Bedienhebels erreicht, da lediglich ein Elektromotor mit Untersetzungsgetriebe vorgesehen und die weiteren Maßnahmen durch eine einfache Federanordnung erreicht ist. Bei dem erfindungsgemäßen Joystick wird eine Mischung von aktiver und passiver Rückmeldung verwendet, wobei für die Lenkung die Bewegung nach links und rechts des Joysticks zuständig und mit einer aktiven Kraftrückmeldung versehen ist, während zum Beschleunigen und Verzögern die Vor- und Rückbewegung des Joysticks zuständig ist, die lediglich passiv ausgelegt ist, indem der Joystick in die Nullposition zurückfedert.

Eine bevorzugte Ausgestaltung des Joysticks ist durch die Merkmale nach Anspruch 2 vorgesehen. Hierbei wirkt als Untersetzungsgetriebe das Zahnrad auf ein Segment des Innenzahnkranzes, das auch als Außenzahnkranz ausgeführt sein kann, wodurch das Getriebe ausreichend wenig Getriebespiel aufweist. Falls noch eine genauere Positionierung notwendig ist, kann bspw. ein zweites gefedertes Zahnrad auf den Innenzahnkranz wirken, und zwar auf der gleichen Achse wie das erste Zahnrad, wobei das zweite Zahnrad darauf drehbar gelagert ist. Auch kann statt dessen der Spielausgleich durch einen zusätzlichen axial gelagerten und gefederten Zahnkranz ausgeführt werden. Durch die Feder wird das zweite Zahnrad axial gegen das erste Zahnrad verspannt, so dass das Getriebespiel herausgefedert wird. Als federndes Element wird anstelle der bekannten Torsionsfeder eine Blattfeder verwendet, welche außerhalb der Drehachse befestigt ist. Dies ist preiswerter und schneller herzustellen.

Mit den Merkmalen nach Anspruch 3 und ggf. denen des Anspruchs 4 kann die Positionierung des Griffs auf eine bestimmte Position erleichtert werden.

Vorteilhafte Ausgestaltungen von Schwenkhebel und/oder Gelenkteil sowie deren Bewegungsverbindung ergeben sich aus den Merkmalen eines oder mehrerer der Ansprüche 5 bis 7.

Vorteilhafte Ausgestaltungen der Verbindung von Betätiger und Gelenkteil ergeben sich aus den Merkmalen des Anspruchs 8 bzw. des Anspruchs 9 und ggf. denen des Anspruchs 10.

Nach den Merkmalen des Anspruchs 11 bzw. denen des Anspruchs 12 sind vorteilhafte Anordnungen und Ausgestaltungen der Sensoren vorgesehen.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.

Es zeigen:
- Figur 1: in schematischer perspektivischer Darstellung einen Joystick zur Steuerung von Maschinen- und/oder Fahrzeugfunktionen gemäß einem bevorzugten Ausführungsbeispiel vorliegender Erfindung,
- Figur 2: einen mittigen Längsschnitt durch den Joystick nach Figur 1,
- Figur 3: einen Schnitt längs der Linie III-III der Figur 2 und
- Figur 4: einen Schnitt längs der Linie IV-IV der Figur 2.

Der in der Zeichnung gemäß einem bevorzugten Ausführungsbeispiel vorliegender Erfindung dargestellte Joystick bzw. Bedienhebel 10 dient beispielsweise zur Steuerung von Fahrzeugfunktionen, wie die Lenkung nach links und rechts und die Beschleunigung bzw. Verzögerung. Hierbei ist der Bedienhebel 10 mit einem mit einem nicht dargestellten Handgriff verbundenen Betätiger 11 versehen, der in zwei Freiheitsgraden, das heißt in einer ersten Ebene und in einer dazu senkrechten zweiten Ebene hin und her bewegbar ist. Während die Bewegung in der ersten Ebene (nach links und rechts) die Lenkung eines Fahrzeugs beeinflusst, wird mit einer Bewegung des Betätigers 11 in der dazu senkrechten zweiten Ebene (vor und zurück) das Beschleunigen bzw. Verzögerung des Fahrzeugs erreicht.

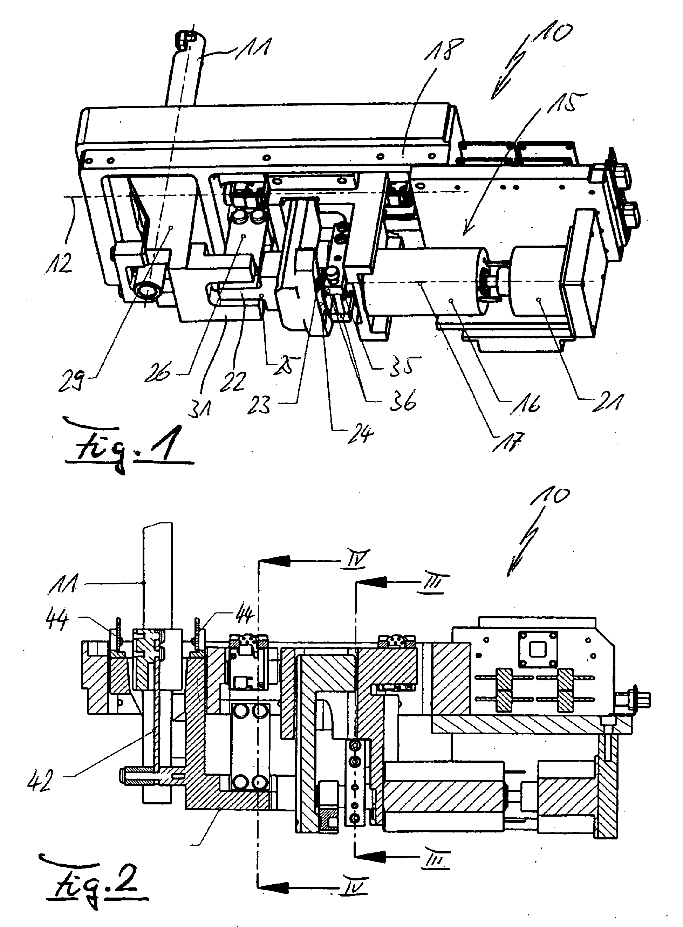

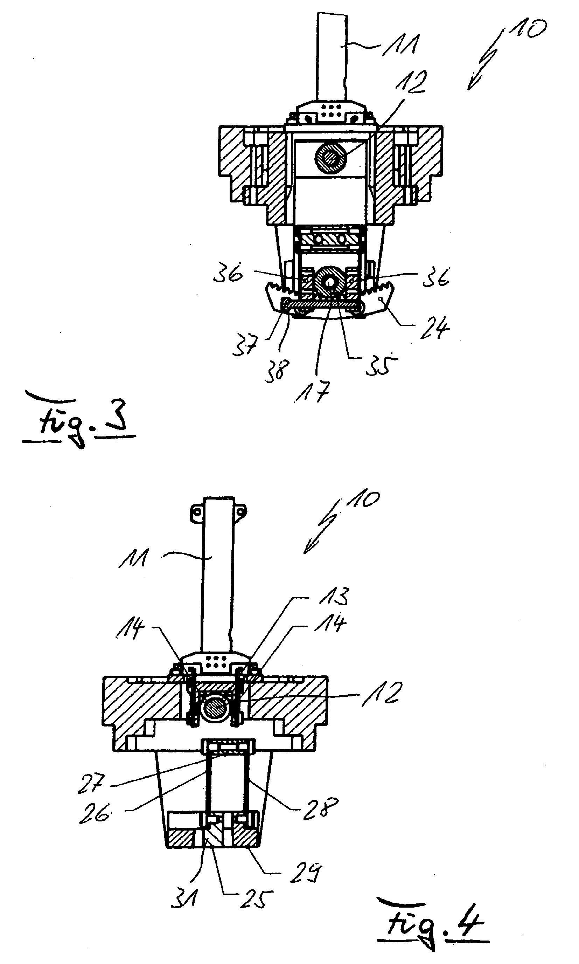

Zum Betätigen bzw. Verschwenken des Bedienhebels 10 in der ersten Ebene ist der Betätiger 11 gemäß Figur 1 um eine Drehachse 12 hin und her bewegbar. Zur Auswertung der Position des Bedienhebels 10 bzw. des Betätigers 11 ist auf der Drehachse 12 gemäß Figur 4 ein Ringmagnet 13 befestigt, der diametral magnetisiert ist. Auf der Position der Nord-Süd-Trennung des Ringmagneten 13 sind Hallsensoren 14 vorgesehen, die aus dem sich ändernden Magnetfeld elektrische Signale generieren. Wenn für die Sensoren 14 Redundanz notwendig ist, können diese auch mehrfach angeordnet sein.

Die Auswertung der Position des Betätigers 11 über Ringmagnet 13 und Hallsensoren 14 wird auf einen Aktuator 15 übertragen, der einen Elektromotor 16 aufweist, dessen Drehachse 17 in einem Abstand zur Drehachse 12 des Betätigers 11 und parallel zu dieser angeordnet ist. Dabei ist die Drehachse 17 des Elektromotors 16 unterhalb der Drehachse 12 des Betätigers 11, das heißt an einem dem nicht dargestellten Handgriff des Joysticks 10 bezüglich eines Lagerrahmens 18 abgewandten Bereich angeordnet. An einem dem Betätiger 11 abgewandten Ende des Elektromotors 16 ist dieser mit einer elektrischen Feststellbremse 21 verbunden, die dann zur Wirkung kommt, wenn der Elektromotor 16 ausfallen sollte. Der Feststellbremse 21 abgewandt ist auf der Drehachse 17 des Elektromotors 16 ein Zahnrad 23 befestigt, das auf ein Segment eines Innenzahnkranzes 24 wirkt. Auf diese Weise ist eine spielarme Untersetzung der Drehzahl des Elektromotors 16 erreicht.

Der Innenzahnkranz 24 ist an einem schwenkbaren Hebel 25 befestigt, dessen Schwenkachse mit der Drehachse 12 des Betätigers 11 zusammenfällt. Der schwenkbare Hebel 25 besitzt dem Innenzahnkranz 24 abgewandt einen Ausleger 22, an dem das eine Ende einer ersten Blattfeder 26 befestigt ist. Das abgewandte andere Ende der ersten Blattfeder 26 ist an einem in Richtung der Federwirkung bewegbar gehaltenen Klotz 27 (Figur 4) befestigt, der an seiner der Befestigungsseite für die erste Blattfeder 26 abgewandt andere Befestigungsseite mit dem einen Ende einer zweiten Blattfeder 28 fest verbunden ist. Das abgewandten anderen Ende der zweiten Blattfeder 28, die zur ersten Blattfeder 26 etwa parallel verläuft, ist mit dem gabelförmigen Ende 31 eines Gelenkteils 29 fest verbunden. Zwischen das gabelförmige Ende 31 des Gelenkteils 29, an dessen einem Zinken die zweite Blattfeder 28 befestigt ist, greift der Ausleger 22 des schwenkbaren Hebels 25. Die Schwenkachse des Gelenkteils 29 fällt mit der Drehachse 12 des Betätigers 11 des Bedienhebels 10 zusammen. Das Gelenkteil 29 ist mit dem Betätiger 11 in Richtung der Hin- und Herbewegung in der ersten Ebene bewegungsschlüssig verbunden. Auf diese Weise verbleibt der Joystick bzw. Bedienhebel 10 in der vom Bedienenden von Hand vorgegebenen Position, das heißt durch die aktive Kraftrückmeldung über den Aktuator 15.

In nicht dargestellter Weise kann zur noch genaueren, praktisch spielfreien Positionierung neben dem Zahnrad 23 ein zweites Zahnrad auf den Innenzahnkranz 24 wirken, wobei das zweite Zahnrad zwar auf der gleichen Achse wie das erste Zahnrad 23 jedoch darauf drehbar gelagert ist. Durch eine Feder wird das zweite Zahnrad axial gegen das erste Zahnrad 23 verspannt, wodurch das Getriebespiel herausgefedert wird. Es ist aber auch möglich den Spielausgleich durch einen zusätzlichen axial gelagerten und gefederten Zahnkranz auszuführen. Dieser sowie der Zahnkranz 24 können als Innen- oder Außenzahnkranz ausgeführt sein.

Zur Erleichterung der Positionierung des Joysticks bzw. Bedienhebels 10 auf eine bestimmte Position ist beim dargestellten Ausführungsbeispiel auf der Drehachse 17 des Elektromotors 16 vor dem Zahnrad 23 ein Reibrad (Figur 3) montiert, auf das zwei federnd gelagerte Bremsklötze 36 gedrückt werden. Die beiden Bremsklötze 36 werden durch eine Schraube 27 zusammengedrückt, unter deren Kopf 38 in nicht dargestellter Weise eine Feder, beispielsweise Spiralfeder angeordnet ist, so dass mit Hilfe der Drehung der Schraube 37 die Reibung eingestellt werden kann.

Die Bewegung des Betätigers 11 des Joysticks 10 in der zur ersten Ebene senkrechten zweiten Ebene ergibt sich aus Figur 2. Der Betätiger 11 ist am Gelenkteil 29 zu beiden Seiten über Blattfedern 42 befestigt. Auf diese Weise ist der Betätiger 11 am Gelenkteil 29 hin und her schwenkbar gelagert. Wird vom Benutzer eine Kraft auf den Joystick bzw. Bedienhebel 10 in die eine oder andere Richtung in dieser zweiten Ebene ausgeübt, kann der Betätiger 11 um einen entsprechenden Bereich in die eine oder andere Richtung federn. Diese Bewegung wird durch Hallsensoren 44 ausgewertet, die am Gelenkteil 29 befestigt sind. Das Gelenkteil 29 ist in diesem Bereich als Ring ausgebildet, durch den der Betätiger 11 hindurchtritt. Die beiden Hallsensoren 44 liegen somit einander diametral gegenüber, so dass beide Bewegungsrichtungen des Betätigers 11 erfasst werden können. Die Hallsensoren 44 sind mit dem Gelenkteil 29 verschwenkbar, so dass eine Verschwenkung des Betätigers 11 in der zweiten Ebene in jeder Position des Verschwenkens des Betätigers 11 in der ersten Ebene erfasst werden kann. Beim Verschwenken in der zweiten Ebene ändert sich bei Annäherung bzw. Entfernung des Magneten am Betätiger 11 das Magnetfeld am Sensor, so dass sich hieraus eine Änderung des Sensorsignals ergibt.

Anstelle der Blattfedern 42 zur Lagerung des Betätigers 11 am Gelenkteil 29 kann auch ein Drehlager vorgesehen sein, wobei dann die Federung durch beispielsweise Schenkelfedern erfolgen kann.

Es versteht sich, dass neben den vorstehend beschriebenen Ausführungsbeispielen weitere gleichwertige Ausführungsbeispiele möglich sind.

## Patentansprüche

1. Joystick (10) zur Steuerung von Maschinen- und/oder Fahrzeugfunktionen, mit einem Betätiger (11), der mittels eines Gelenks mit zwei Freiheitsgraden in unterschiedlicher Richtung auslenkbar ist, wobei die in einer ersten Ebene stattfindende hin- und hergehende Bewegung des Betätigers (11) einer aktiven Kraftruckmeldung in Form eines Elektromotors (16) und eines Untersetzungsgetriebes ausgesetzt ist und die in einer dazu senkrechten zweiten Ebene stattfindende hin- und hergehende Bewegung des Betätigers (11) einer passiven Kraftrückmeldung in Form einer federnden Rückstellung ausgesetzt ist; **dadurch gekennzeichnet, dass** das Untersetzungsgetriebe (23, 24) spielarm ausgebildet ist und ausgangsseitig über eine einen Schwenkhebel (25) und ein Gelenkteil (29) verbindende Blattfeder-Anordnung (26, 28) mit dem Betätiger (11) verbunden ist.

2. Joystick nach Anspruch 1, **dadurch gekennzeichnet, dass** das Untersetzungsgetriebe ein an der Ausgangswelle des Elektromotors (16) drehfest gehaltenes Zahnrad (23) aufweist, das auf ein Innenzahnkranz-Segment (24) wirkt, das am Schwenkhebel (25) befestigt ist.

3. Joystick nach Anspruch 1 oder 2, **dadurch gekennzeichnet, dass** auf der Ausgangswelle des Elektromotors (16) ein Reibrad (35) drehfest montiert ist, auf das zwei federnd gelagerte Brems- bzw. Reibklötze (36) drückbar sind.

4. Joystick nach Anspruch 3, **dadurch gekennzeichnet, dass** der oder die Bremsklötze (36) durch eine einstellbare Schraube (37), die axial federbelastet ist, beaufschlagbar ist bzw. sind.

5. Joystick nach mindestens einem der vorhergehenden Ansprüche, **dadurch gekennzeichnet, dass** der Schwenkhebel (25) einen Ausleger (22) aufweist, an dem eine erste Blattfeder (26) befestigt ist, die andernends mit einem Bauteil (27) verbunden ist, an dem eine zweite Blattfeder (28) befestigt ist, die andernends mit dem Gelenkteil (29) verbunden ist.

6. Joystick nach Anspruch 5, **dadurch gekennzeichnet, dass** die Achse des Schenkhebels (25) in der Drehachse (12) des Betätigers (11) gelagert ist.

7. Joystick nach Anspruch 5 oder 6, **dadurch gekennzeichnet, dass** die Achse des Gelenkteils (29) in der Drehachse (12) des Betätigers (11) gelagert ist.

8. Joystick nach mindestens einem der vorhergehenden Ansprüche, **dadurch gekennzeichnet, dass** der Betätiger (11) in einer Bewegungsebene mit dem Gelenkteil (29) bewegungsfest verbunden ist.

9. Joystick nach mindestens einem der vorhergehenden Ansprüche, **dadurch gekennzeichnet, dass** der Betätiger (11) in der anderen Bewegungsebene gegenüber dem Gelenkteil (29) federelastisch relativ bewegbar ist.

10. Joystick nach Anspruch 9, **dadurch gekennzeichnet, dass** der Betätiger (11) am Gelenkteil (29) mittels Blattfedern (42) gehalten ist.

11. Joystick nach mindestens einem der vorhergehenden Ansprüche, **dadurch gekennzeichnet, dass** auf der Drehachse (12) des Betätigers (11) in der einen Ebene ein diametral magnetisierter Ringmagnet (13) angeordnet ist, der mit Hallsensoren (14) zusammenwirkt.

12. Joystick nach mindestens einem der vorhergehenden Ansprüche, **dadurch gekennzeichnet, dass** am Betätiger (11) Permanentmagnete vorgesehen sind, die bei Bewegung des Betätigers (11) in der anderen Ebene mit am Gelenkteil (29) angeordnete Hallsensoren (44) zusammenwirken.

## Claims

1. A joystick (10) for controlling the functions of machines and/or vehicles, having an actuator (11) which can be moved in different directions by means of a joint having two degrees of freedom, whereby the back-and-forth motions of the actuator (11) occurring in a first plane are subjected to an active force feedback in the form of an electromotor (16) and a reduction gear, and the back-and-forth motions of the actuator (11) which occur in a second plane perpendicular to the first plane are subjected to a passive force feedback in the form of a spring-action reset device, **characterized in that** the reduction gear (23, 24) is designed with low backlash and is connected on the output side to the actuator (11) via, a leaf-spring arrangement (26, 28) which connects a pivoting lever (25) to a joint part (29).

2. The joystick as recited in Claim 1, **characterized in that** the reduction gear has a gear wheel (23) that is supported on the output shaft of the electromotor (16) in a rotationally fixed manner and that acts upon an inner ring gear segment (24), which is attached to the pivoting lever (25).

3. The joystick as recited in Claim 1 or 2, **characterized in that** a friction wheel (35) is mounted on the output shaft of the electromotor (16) in a rotationally fixed manner, and two spring-supported braking or friction pads (36) can be pressed against said friction wheel.

4. The joystick as recited in Claim 3, **characterized in that** the breaking pad or pads (36) may be acted upon by an adjustable screw (37), which is axially biased by a spring.

5. The joystick as recited in at least one of the preceding claims, **characterized in that** the pivoting lever (25) has an extension arm (22), on which a first leaf spring (26) is attached, which at its other end is connected to a component (27) on which a second leaf spring (28) is attached, which at its other end is connected to the joint part (29).

6. The joystick as recited in Claim 5, **characterized in that** the axis of the pivoting lever (25) is positioned in the rotational axle (12) of the actuator (11).

7. The joystick as recited in Claim 5 or 6, **characterized in that** the axis of the joint part (29) is positioned in the rotational axle (12) of the actuator (11).

8. The joystick as recited in at least one of the preceding claims, **characterized in that** the actuator (11) in one plane of motion is fixedly joined to the joint part (29).

9. The joystick as recited in at least one of the preceding claims, **characterized in that** the actuator (11) in the other plane of motion may move relative to the joint part (29) in a spring-elastic manner.

10. The joystick as recited in Claim 9, **characterized in that** the actuator (11) is supported on the joint part (29) by leaf springs (42).

11. The joystick as recited in at least one of the preceding claims, **characterized in that** a diametrically magnetized ring magnet (13), which cooperates with Hall sensors (14), is arranged in one plane on the rotational axle (12) of the actuator (11).

12. The joystick as recited in at least one of the preceding claims, **characterized in that** on the actuator (11) permanent magnets are provided that, in response to the motion of the actuator (11), cooperate with Hall sensors (44), which are arranged on the joint part (29).

## Revendications

1. Manette de commande (10) de type joystick pour commander des fonctions sur des machines et/ou un véhicule, comportant un manche d'actionnement (11), qui peut être déplacé dans une direction différente au moyen d'une articulation avec deux degrés de liberté, sachant que le mouvement de va-et-vient du manche d'actionnement (11) effectué dans un premier plan est soumis à un rappel de force actif sous la forme d'un moteur électrique (16) et d'un démultiplicateur et le mouvement de va-et-vient du manche d'actionnement (11) effectué dans un deuxième plan, perpendiculaire au premier plan, est soumis à un rappel de force passif sous la forme d'un rappel par ressort, **caractérisée en ce que** le démultiplicateur (23, 24) est réalisé sans jeu et est relié du côté sortie au manche d'actionnement (11) par l'intermédiaire d'un système de ressorts à lames (26, 28) reliant un levier pivotant (25) et un élément articulé (29).

2. Manette de commande de type joystick selon la revendication 1, **caractérisée en ce que** le démultiplicateur comporte une roue dentée (23), qui est maintenue solidaire en rotation sur l'arbre de sortie du moteur électrique (16) et qui agit sur un segment (24) d'une couronne dentée intérieure, qui est fixée sur le levier pivotant (25).

3. Manette de commande de type joystick selon la revendication 1 ou 2, **caractérisée en ce que** sur l'arbre de sortie du moteur électrique (16) est montée de manière solidaire en rotation une roue à friction (35), contre laquelle peuvent être pressées deux cales de freinage ou cales de friction (36), montées sur ressort.

4. Manette de commande de type joystick selon la revendication 3, **caractérisée en ce que** la ou les cales de freinage (36) peut ou peuvent être sollicitée(s) par une vis (37) réglable, qui est sollicitée par ressort dans la direction axiale.

5. Manette de commande de type joystick selon au moins l'une des revendications précédentes, **caractérisée en ce que** le levier pivotant (25) comporte un bras (22), sur lequel est fixé un premier ressort à lames (26), dont l'autre extrémité est reliée à une pièce (27) sur laquelle est fixé un deuxième ressort à lames (28), dont l'autre extrémité est reliée à l'élément articulé (29).

6. Manette de commande de type joystick selon la revendication 5, **caractérisée en ce que** l'axe du levier pivotant (25) est positionné dans l'axe de rotation (12) du manche d'actionnement (11).

7. Manette de commande de type joystick selon la revendication 5 ou 6, **caractérisée en ce que** l'axe de l'élément articulé (29) est positionné dans l'axe de rotation (12) du manche d'actionnement (11).

8. Manette de commande de type joystick selon au moins l'une des revendications précédentes, **caractérisée en ce que** le manche d'actionnement (11) est relié de manière solidaire en mouvement avec l'élément articulé (29) dans un plan de mouvement.

9. Manette de commande de type joystick selon au moins l'une des revendications précédentes, **caractérisée en ce que** le manche d'actionnement (11) est relativement mobile par rapport à l'élément articulé (29), de manière élastiquement flexible dans un autre plan de mouvement.

10. Manette de commande de type joystick selon la revendication 9, **caractérisée en ce que** le manche d'actionnement (11) est maintenu sur l'élément articulé (29) au moyen de ressorts à lames (42).

11. Manette de commande de type joystick selon au moins l'une des revendications précédentes, **caractérisée en ce que** sur l'axe de rotation (12) du manche d'actionnement (11) est disposé, dans l'un des plans, un aimant annulaire (13) diamétralement magnétisé, qui coopère avec des capteurs à effet Hall (14).

12. Manette de commande de type joystick selon au moins l'une des revendications précédentes, **caractérisée en ce que** sur le manche d'actionnement (11) sont prévus des aimants permanents qui, pendant le mouvement du manche d'actionnement (11) dans l'autre plan, coopèrent avec des capteurs à effet Hall (44), disposés sur l'élément articulé (29).
